# EUROPEAN PATENT APPLICATION

(11) **EP 0 524 404 A1**
(43) Date of publication of application: **27.01.1993**
(21) Application number: 92109106.2
(22) Date of filing: 29.05.1992
(51) Int. Cl.: G03C 3/00, C08L 23/02, C08K 5/10

(54) **Resin composition and packaging material for packaging photosensitive materials**

(30) Priority: 28.05.1991 JP 123965/91; 11.09.1991 JP 231639/91
(71) Applicant: Fuji Photo Film Co., Ltd., Kanagawa-ken (JP)
(72) Inventor: Akao, Mutsuo, c/o Fuji Photo Film Co., Ltd., Minami Ashigara-shi, Kanagawa (JP); Osanai, Hiroyuki, c/o Fuji Photo Film Co., Ltd., Minami Ashigara-shi, Kanagawa (JP); Kawamura, Makoto, c/o Fuji Photo Film Co., Ltd., Minami Ashigara-shi, Kanagawa (JP); Inoue, Koji, c/o Fuji Photo Film Co., Ltd., Minami Ashigara-shi, Kanagawa (JP)
(74) Representative: Grünecker, Kinkeldey, Stockmair & Schwanhäusser Anwaltssozietät

(57) **Abstract**

A resin composition comprising a thermoplastic resin, at least one of a lubricant, an antioxidant and an organic nucleating agent, and a dripproofing agent which inhibits and equalizes the bleeding out of the lubricant, antioxidant and organic nucleating agent contained therein, a packaging material for photosensitive materials molded of the above resin composition by injection molding or inflation process, and a container for a photographic film which is made of a polyolefin resin composition comprising a dripproofing substance having antifog action or dripproof action, a lubricant, an antioxidant, and more than 50 wt. % of a polyolefin resin. They inhibit and equalize the bleeding out of the lubricant, etc, and prevent the formation of water drops on the surface.

## Description

### BACKGROUND OF THE INVENTION

This invention relates to a resin composition and packaging materials for packaging photosensitive materials including a container for photographic film, on which the surface water drops do not form, even when they are transferred from a cold place to a warm place.

Heretofore, various packaging materials have been developed for photosensitive materials. For example, a packaging film is disclosed in U.S.P. 4,701,359, a spool for photographic film is disclosed in Japanese Patent KOKAI No. 62-286043, and a container for a photographic film cartridge is disclosed in Japanese Patent KOKAI No. 61-73947 and Japanese Utility Model KOKAI No. 1-113235.

In the past, containers for a photographic film cartridge were formed of metal lamella which does not adversely affect photographic film and is excellent in moistureproofness and gas barrier. The material of the containers was changed to plastic resin according as mass use thereof. As the thermoplastic resin, polystyrene resin and homopolypropylene resin, having a low melt flow rate (MFR) and a high rigidity, from the viewpoint of the substitution for metal. However, low MFR propylene-ethylene random copolymer are used now, because of the necessity for the improvement in impact strength and in transparency. The inventor was also developed a container body for a photographic film cartridge composed of a high rigidity high MFR polypropylene resin which can shorten molding cycle and can reduce molding troubles (U.S.P. 4,639,386) and another container body containing 0.05 to 1 wt. % of fatty acid amide lubricant wich improve pneumatic transportation immediately after molding and injection moldability (Japanese Patent KOKAI No. 61-73947). In addition, various containers for a photographic film are disclosed in Japanese Patent KOKAI No. 63-223640 and Japanese Utility Model KOKAI No. 1-88940.

Incidentally, photographic photosensitive materials are graudally degraded during storage in high temperature conditions for a long period even moistureproof conditions are kept. For example, photographic films are gradually degraded during storage in their photographic properties, such as sensitivity, tone, fogging, stain and color balance. Accordingly, photographic photosensitive materials are usually stored in a cold storage in order to ensure their qualities for a long period, and are taken out to ordinary temperature environment at the time of use. In usual homes, photographic films which are put in a sealed plastic container are often put in a polyethylene film bag, and preserved in a refrigerator. In the case of conventional packaging materials for photosensitive materials, such as packaging films packaging photographic photosensitive materials, spools for a photographic film and containers for a photographic film cartridge, water drops form on the surface, when the photographic photosensitive materials are taken out of the cold storage or refrigerator. The water drops adversely affect photographic photosensitive materials, and moreover, render to be difficult of the discrimination of the content. When containers for a photographic film cartridge are left in the sunlight for more than 10 minutes, moisture contained in the photographic film and in the teremp cloth of the cartridge adhere to the inner wall of the containers resulting in the difficulty in seeing letters, CI mark and the like printed on the cartridge and in the adverse affect upon the value of goods. Even in the case of colored containers colored by blending light-shielding material or by printing which have no object to see the kind of photographic film or the letters printed on the cartridge water drops adhered onto the surface of the container render touch by users displeasure, and occasionally photosensitive layer adheres to the photographic film cartridge by water drops yielded on the photosensitive layer.

### SUMMARY OF THE INVENTION

An object of the invention is to provide a resin composition capable of preventing water drops from forming on the surface even though environmental temperature shaply varies.

Another object of the invention is to provide a packaging material for packaging photosensitive materials using the above resin composition.

Another object of the invention is to provide a container for a photographic film, particularly a container for a photographic film cartridge, having dripproof properties and not forming water drops on the surface.

In order to achieve the above objects, the inventors have investigated, and found that water drops are formed caused by uneven bleeding out of lubricant, etc. blended with resin. Then, they have further investigated, and found that water drops do not form by adding a substance which inhibits and equalize the bleeding out of lubricant, etc. to complete the invention.

Thus, the present invention provides a resin composition which comprises a thermoplastic resin containing at least one of a lubricant, an antioxidant and an organic nucleating agent and a dripproofing agent capable of inhibiting and equalizing the bleeding out of them, and a packaging material for photosensitive materials using the same.

The present invention also provides a container for a photographic film which comprises a polyolefin resin composition containing more than 50 wt. % of a polyolefin resin, a substance having dripproof action or antifog action, a lubricant an an antioxidant.

### BRIEF DESCRIPTION OF THE DRAWINGS

Figure 1 is a partially sectional view of a light-shielding film made of the resin composition for packaging photosensitive materials of the invention.

Figure 2 is a partially sectional view of a light-shielding laminated film made of using the resin composition for packaging photosensitive materials of the invention.

Figure 3 is a perspective view of a photographic film unit with a lens packaged by a clear laminated film made of using the resin composition for packaging photosensitive materials of the invention.

Figure 4 is a perspective view of a package of JIS 135 films packaged by a clear laminated film made of using the resin composition for packaging photosensitive materials of the invention.

Figure 5 is an exploded perspective view of a photographic film unit with a lens made of using the resin composition for packaging photosensitive materials of the invention.

Figure 6 is a front view of a spool for a photographic film made of using the resin composition for packaging photosensitive materials of the invention.

Figure 7 is a sectional view, partially enlarged, of a container for a photographic film cartridge of a separated cap type made of using the resin composition for packaging photosensitive materials of the invention.

Figure 8 is a perspective view of a rectangular box type container for a photographic film cartridge of a hinged cap type made of using the resin composition for packaging photosensitive materials of the invention.

Figure 9 is an exploded perspective view of a cartridge for a photographic film made of using the resin composition for packaging photosensitive materials of the invention.

Figure 10 is a sectional view of a light-shielding case for a microfilm made of using the resin composition for packaging photosensitive materials of the invention.

Figure 11 is an exploded cartridge body of a photographic film cartridge made of using the resin composition for packaging photosensitive materials of the invention.

Figures 12 and 13 are sectional views of containers for a photographic film cartridge of a cap-fitting type to which the invention is applied.

Figure 14 is a sectional view of a container for a photographic film cartridge of a hinged cap type to which the invention is applied.

Figure 15 is a perspective view of a container for a photographic film cartridge of a hinged cap type wrapped by a shrinkable film to which the invention is applied.

Figuer 16 is a perspective view of a container for a photographic film cartridge of a hinged cap type to which the invention is applied.

Figure 17 is a perspective view of a container for a photographic film cartridge of a lock fitting type to which the invention is applied.

Figure 18 is a perspective view of a container body for a photographic film cartridge of a fitting type to which the invention is applied.

Figure 19 is a perspective view of a container for a photographic film cartridge of a hinged cap type to which the invention is applied.

### DETAILED DESCRIPTION OF THE INVENTION

The thermoplastic resin composing the resin composition of the invention includes low density polyethylene (high pressure branched homopolyethylene, LDPE), linear low density polyethylene (low pressure or modified high pressure ethylene-α-olefin copolymer, L-LDPE), high density polyethylene (HDPE), ethylene-vinyl acetate copolymer (EV_{A}), polypropylene (homo, random, block, PP), polyethylene terephthalate (polyester, PET), polyamide (PA), polyvinyl chloride (PVC), vinylidene chloride-vinyl chloride copolymer (PVDC), ethylene-vinyl alcohol copolymer (EVOH), polyvinyl alcohol (PVA), polystyrene (PS) and the like.

Preferred thermoplastic resins are ethylene copolymers because of being excellent in physical strength, heat sealing properties and dispersibility of the absorbent of additives. Suitable ethylene copolymer resins are ethylene-vinyl acetate copolymer resin, ethylene-propylene copolymer resin, ethylene-photographic-butene copolymer resin, ethylene-butadiene copolymer resin, ethylene-vinyl chloride copolymer resin, ethylene-methylmethacrylate copolymer resin, ethylene-methyl acrylate copolymer resin, ethylene-ethyl acrylate copolymer (EE_{A}) resin, ethylene-acrylonitrile copolymer resin, ethylene-acrylic acid copolymer resin, ionomer resin (copolymer of ethylene and unsaturated acid crosslinked using metal such as zinc), ethylene-α-olefin copolymer (L-LDPE) resin, ethylene-propylene-butene-1 ternary copolymer resin, and the like. Among the above ethylene copolymer resins, L-LDPE resin and EE_{A} resin are preferred, because they are excellent in film moldability and heat sealing properties and are great in bag rupture strength, impact puncture strength and tear strength. In the case of using as a film for packaging photographic photosensitive materials, L-LDPE resin and EE_{A} resin do not affect photographic photosensitive materials adversely.

In order to adjust clip properties to be necessary, it is preferred to blend with other thermoplastic resins, elastomer rubbers, various additives or modifiers.

The L-LDPE resin is called third polyethylene resin, and it is a low cost high strength resin, having the advantages of both low, medium density polyethylene resin and high density polyethylene resin, which meets the requirements, i.e. resource conservation and energy conservation, of the times. The L-LDPE resin is a copolymer of ethylene and α-olefin, and it has a linear structure having short branched. The number of carbon atoms of the α-olefin is 3 to 13. Preferable α-olefin has a number of carbon atoms of 4 to 10, and exapmles of the α-olefin are butene-1, 4-methylpentene-1, hexene-1, heptene-1 and octene-1. The density is usually in the range of 0.87 to 0.95 g/cm³, and the melt index in usually 0.1 to 50 g/10 minutes. Most of the L-LDPE resin is synthesized by low pressure method, and partly synthesized by modified high pressure method. Examples of commercial L-LDPE resin are "G-Resin" and "TUFLIN" and "NUC-FLX" (UCC), "NUC Polyethylene-LL" and "TUFTHENE" (Nippon Unicar) "Excelene VL" (Sumitomo Chemical), "Idemitsu Polyethylene-L" and "Moretec" (Idemitsu Petrochemical), "Dowlex" (Dow chemical), "Suclear" (Dupont de Nemour, Canada), "Marlex" (Phillips), "Neozex" and "Ultzex" (Mitsui Petrochemical Industries), "Nisseki Linirex" (Nippon Petrochemicals), "Mitsubishi Polyethy-LL" (Mitsubishi Petrochemical), "Stamilex" (DSM), and the like. Preferable L-LDPE resins are copolymers of ethylene and α-olefin of which the number of carbon atoms is 6 to 8 having a melt index (MI) of 0.8 to 10 g/10 minutes (ASTM D-1238) and a density of 0.870 to 0.940 g/cm³ (ASTM D-1505) manufactured by liquied proces or vapor process. Very low density L-LDPE resins having a density of less than 0.910 g/cm³ are also preferred.

The EE_{A} resin is not restricted, and commercial EE_{A} resins have, for example, a comonomer content of 7 to 41 %, a MFR of 1.5 to 1500 g/10 minutes (ASTM D-1238), a density of 0.93 to 0.95 g/cm³ (ASTM D-1505) a brittle temperature of -40°C to less than -75°C (ASTM D-746) and a tensile strength of 14 to 160 kg/cm² (ASTM D-638).

The content of the thermoplastic resin is more than 50 wt. %.

The polyolefin resin composing the container for a photographic film is low density, medium density or high density homopolyethylene resin, ethylene-α-olefin copolymer resin, homopolypropylene resin, propylene-α-olefin copolymer resin, polyolefin elastomer, or the like. Preferred polyolefin resins have a heat history of more than 180°C preferably more than 190°C, particularly preferably more than 200°C in view of uniform blending of various additives. Moreover, it is also preferred to contain at least one of propylene-α-olefin copolymer resin, high density polyetylene resin, polyolefin elastomer and ethylene-α-olefin copolymer in order to ensure impact strength, wear resistance, moistureproofness, slipping character, rigidity, gas barrier, moldability and the like which are necessary for photographic film containers. Particularly preferable resins are ethylene-α-olefin random copolymer resins and propylene-α-olefin random copolymer resins because of being excellent in transparency, rigidity, impact strength and gloss and not generating white powder. A suitable number of carbon atoms of α-olefin is 3 to 10 in view of polymerizability and cost. Preferred ethylene-α-olefin random copolymer resins are ethylene-butene-1 random copolymer resin, ethylene-4-methylpentene-1 random copolymer resin, ethylene-hexene-1 random copolymer resin, ethylene-octene-1 random copolymer resin, etc. A suitable content of α-olefin is 0.1 to 20 wt. %, preferably 0.5 to 10 wt. %, of ethylene-α-olefin random copolymer resin. In view to ensure injection moldability and necessary properties as the container for a photographic film, a suitable MFR is 5 to 80 g/10 minutes, preferably 10 to 70 g/10 minutes, particularly preferably 15 to 60 g/10 minutes, and a suitable density is more than 0.925 g/cm³, preferably more than 0.935 g/cm³, particularly preferably more than 0.940 g/cm³. In view to ensure resistance to crushing and prevention of deformation, a suitable Olsen rigidity (ASTM D-747) is more than 3,500 kg/cm², particularly preferably more than 5,000 kg/cm². In view to prevent heat deformation in the sunlight and the like, a suitable Vicat softening point (ASTM D-1525) is more than 95°C, preferably more than 100°C, particularly preferably more than 110°C. Preferred propylene-α-olefin random copolymer resins are propylene-ethylene random copolymer resin, propylene-butene-1 random copolymer resin, etc. A suitable content of α-olefin is 0.1 to 20 wt. %, preferably 0.5 to 10 wt. %, of propylene-α-olefin random copolymer resin. As the physical properties, a suitable MFR is 5 to 80 g/10 minutes, preferably 10 to 70 g/10 minutes, particularly preferably 15 to 60 g/10 minutes, and a suitable bending elastic modulus (ASTM D-/90) is more than 5,000 kg/cm², preferably more than 7,000 kg/cm², particularly preferably more than 8,500 kg/cm². Particularly, the above ethylene-α-olefin random copolymers and propylene-α-olefin random copolymers improve greatly ridigity and transparency, decrease molding troubles sharply and shorten molding cycle sharply, by blending the nucleating agent. Besides, in the case of blending a light-shielding material or color material, the container for a photographic film has a high commercial value and is excellent in surface gloss, color sharpness and good appearance. The content of the polyolefin resin is more than 50 wt. %, preferably more than 70 wt. %, particularly preferably more than 85 wt. %. When the content of the polyolefin resin is less than 50 wt. %, moistureproofness and gas barrier against sulfur dioxide gas, formalin gas, chlorine gas, oxygen gas, etc., which adversely affect photographic film, are insufficient. Moreover, it is difficult to ensure impact strength, wear resistance, compressive strength, etc.

Preferred embodiments of the container for a photographic film include containers for a photographic film made of the resin composition containing at least more than 85 wt. % of ethylene-α-olefin (butene-1 is particularly preferred) random copolymer resin having a MFR of 10 to 70 g/10 minutes, a density of more than 0.935 g/cm³, an Olsen rigidity of more than 5,000 kg/cm2, 0.01 to 3 wt. % of the substance having dripproof action or antifog action, 0.01 to 3 wt. % of the lubricant and 0.01 to 0.5 wt. % of the antioxidant. Further preferable containers for a photographic film are made of the above ethylene-α-olefin copolymer resin composition in which 0.01 to 2 wt. % of the nucleating agent. The preferred embodiment also include containers for a photographic film made of the above ethylene-α-olefin copolymer resin composition containing or not containing the nucleating agent, and containing a light-shielding material) and/or a color material. In the case of propylene-α-olefin resin, preferred embodiments of the container for a photographic film include ocntainers for a photographic film made of the resin composition containing at least more than 85 wt. % propylene-α-olefin (ethylene is preferred) random copolymer resin having a MFR of 10 to 70 g/10 minutes and a bending elastic modulus of more than 7,000 kg/cm², 0.01 to 3 wt. % of the substance having dripproof action or antifog action, 0.01 to 3 wt. % of the lubricant and 0.01 to 0.5 wt. % of the antioxidant. Further preferable containers for a photographic film are made of the above propylene-α-olefin copolymer resin composition in which 0.01 to 2 wt. % of the nucleating agent. The preferred embodiment also include containers for a photographic film made of the above propylene-α-olefin copolymer resin composition containing or not containing the nucleating agent, and containing a light-shielding material (preferably light-reflective light-shielding material) and/or a color material.

The dripproofing agent has the function to inhibit and equalize the bleeding out of lubricant, antioxidant and organic nucleating agent. The dripproofing agent includes diglycerine monostearate ester, polyglycerine monopalmitate ester, sorbitan monolaurate ester, sorbitan monoeurucate, polyoxyethylene sorbitan fatty acid ester, stearic acid monoglyceride, palmitate monoglyceride, oleate monoglyceride, laurate monoglyceride, polyoxyethylene nonylphenyl ether, sorbitan sesquipalmitate, diglycerine sesquioleate, sorbitol fatty acid ester, sorbitol fatty acid·dibasic acid ester, diglycerine fatty acid·dibasic acid ester, glycerine tatty acid·dibasic acid ester, sorbitan fatty acid·dibasic acid ester, sorbitan palmitate, sorbitan stearate, sorbitan palmitate·propylene oxide 3 moles adduct, sorbitan palmitate·propylene oxide 2 moles adduct, sorbitol stearate, sorbitol stearate·ethylene oxide 3 moles adduct, diglycerine palmitate, glycerine palmitate, glycerine palmitate ethylene oxide 2 moles adduct, etc. A suitable content of the dripproofing agent in the resin composition is 0.03 to 5 wt. %, preferably 0.1 to 3 wt. %, more preferably 0.2 to 1.5 wt. %.

To the container for a photographic film, the substance having dripproof action or antifog action is added. The antifog action is the action to prevent a transparent or translucent photographic film container from fogging by the adhesion of water drops, and substances having the antifog action are called dripproof substance. The dripproof action is the action to prevent a translucent opaque or colored photographic film container, where it is difficult to see the generation of fogging, from the adhesion of water drops, and substances having the dripproof action are also called dripproof substance. The dripproof action is separated from the antifog action by the appearance, but both actions are seemed substantially the same action to prevent the generation of water dropps. The substances having dripproof action or antifog action are the above various dripproofing agents and in addition various water-absorptive or hygroscopic substances, such as hydrophilic polymers and water-absorptive polymers having a hydrophilic group which is a polar group or ionic group, e.g. hydroxyl group, carbonyl group, carboxyl group, amino group, amide group, imide group and sulfonyl group, connected to polymer chain or side chain. Examples of the water-absorptive or hygroscopic substances are polyvinyl alcohol, starch, surface-treated starch, modified starch, starch-acrylonitrile hydrolyzate, oxide of vinyl acetate-methyl acrylate copolymer crosslinked polyacrylamide, polyacrylamide-acrylic acid copolymer, polyacrylic acid-diacrylate copolymer, polyethylene oxide, polyvinyl pyrrolidone, crosslinked polyvinyl alcohol, polyethylene glycol, etc.

The dripproofing agent is not limited to enumerate above, and include any substance which renders a content angle of pure water of less than 50 degrees, preferably less than 45 degrees, particularly preferably less than 35 the photographic film container containing 0.01 to 3 wt. % of the substance.

The dripproofing agent, the water-absorptive substance and the hygroscopic substance may be combined.

A suitable content of the substance having dripproof action or antifog action in the photographic film container is 0.01 to 3 wt. %, preferably 0.1 to 2 wt. %. When the content is less than 0.01 wt. %, the antifog effect is insufficient. Moreover, it cannot be inhibited to deposit the additives which tend to bleed out, such as lubricant and antioxidant, in a form of white powder. When the content exceeds 3 wt. %, the increase of the antifog action by increasing the content is little. The surface of the container becomes sticky, and dust is liable to adhere. The substance having dripproof action or antifog action adhered to the surface of photographic film induces uneven developping speed.

The lubricant includes fatty amide lubricants, unsaturated fatty amide lubricants, bis fatty amide lubricants, monoalkyl amide lubricants, silicone lubricants, nonionic surfactant lubricants, hydrocarbon lubricants, fatty acid lubricants, ester lubricants, alcohol lubricants, metallic soap lubricants, etc. Examples of the lubricant are as follows:

### (1) Saturated fatty amide lubricants

Behenic amide lubricants: "DIAMID KN" (Nippon Kasei Chemical Co., Ltd.)
Stearic amide lubricants: "ARMIDE HT" (Lion), "ALFLOW S-10" (Nippon Oil and Fats Co., Ltd.), "FATTY AMIDE S" (Kao Corp.), "NEWTRON 2" (Nippon Fine Chemical Co., Ltd.), "DIAMID 200" and "DIAMID AP-1" (Nippon Kasei Chemical Co., Ltd.), "AMIDE S" and "AMIDE T" (Nitto Kagaku K.K.), etc.
Palmitic amide lubricants: "NEWTRON S-18" (Nippon Fine Chemical Co., Ltd.), "AMIDE P" (Nitto Kagaku K.K.), etc.
Lauric amide lubricants: "ARMIDE C" (Lion Akzo Co., Ltd.), "DIAMID" (Nippon Kasei Chemical Co., Ltd.), etc.

### (2) Unsaturated fatty amide lubricants

Erucic amide lubricants: "ALFLOW P-10" (Nippon Oil and Fats Co., Ltd.). "NEWTRON-S" (Nippon Fine Chemical Co., Ltd.), "LUBROL" (I.C.I.), "DIAMID L-200" (Nippon Kasei Chemical Co., Ltd.), etc.
Oleic amide lubricants: "ARMOSLIP-CP" (Lion Akzo Co., Ltd.), "NEWTRON" and "NEWTRON E-18" (Nippon Fine Chemical Co., Ltd.), "AMIDE-O" (Nitto Kagaku K.K.), "DIAMID 0-200" and "DIAMID G-200" (Nippon Kasei Chemical Co., Ltd.), "ALFLOW E-10" (Nippon Oil and Fats Co., Ltd.), "FATTY AMIDE O" (Kao Corp.), etc.

### (3) Bis fatty amide lubricants

Methylene bis behenic amide lubricants: "DIAMID NK BIS" (Nippon Kasei Chemical Co., Ltd.), etc.
Methylene bis stearic amide lubricants: "DIAMID 200 BIS" (Nippon Kasei Chemical Co., Ltd.), "ARMOWAX" (Lion Akzo Co., Ltd.), "BISAMIDE" (Nitto Kagaku K.K.), etc.
Methylene bis oleic amide lubricants: "LUBRON O" (Nippon Kasei Chemical Co., Ltd.), etc.
Ethylene bis stearic amide lubricants: "ARMOSLIP EBS" (Lion Akzo Co., Ltd.), etc.
Hexamethylene bis stearic amide lubricants: "AMIDE 65" (Kawaken Fine Chemicals Co., Ltd.), etc.
Hexamethylene bis oleic amide lubricants: "AMIDE 60" (Kawaken Fine Chemicals Co., Ltd.), etc.

### (4) Monoalkylol amide lubricants

N-(2-Hydroxyethyl)lauric amide lubricants: "TOHOL N 130" (Toho Chemical Ind. Co., Ltd.), etc.
N-(2-Hydroxyethyl)stearic amide lubricants: "AMISOL" (Kawaken Fine Chemicals Co., Ltd.), etc.
N-(2-Hydroxymethyl)stearic amide lubricants: "METHYLOL AMIDE" (Nitto Kagaku K.K.), etc.
Silicone lubricants: dimethylpolysiloxanes, modified thereof, carboxyl-modified silicone, α-methylstyrene-silicone, α-olefin-modified silicone, polyether-modified silicone, fluorine-modified silicone, hydrophilic special modified silicone, olefin-polyether-modified silicone, epoxy-modified silicone, amino-modified silicone, alcohol-modified silicone, etc. (Shin-Etsu Chemical Co., Ltd., Toray Silicone Co., Ltd.), etc.
Nonionic surfactant lubricants: "ELECTROSTRIPPER TS-2", "ELECTROSTRIPPER TS-3" (Kao Corp.), etc.
Hydrocarbon lubricants: liquid paraffin, natural paraffin, microwax, synthetic paraffin, polyethylene wax, polypropylene wax, chlorinated hydrocarbon, fluorocarbon, etc.
Fatty acid lubricants: higher fatty acids preferably more than C₁₂, hydroxy fatty acids, etc.
Ester lubricants: fatty acid lower alcohol esters, fatty acid polyol esters, fatty aid polyglycol esters, fatty acid fatty alcohol esters, etc.
Alcohol lubricants: polyols, polyglycols, polyglycerols, etc.
Metallic soap: metal salts, such as Li, Mg, Ca, Sr, Ba, Zn, Cd, Al, Sn, Pb salts, of higher fatty acids, such as lauric acid, stearic acid, ricinoleic acid, naphthenic acid, oleic acid, etc.

Among the above lubricant, various silicone lubricants are preferable because of exhibiting not only the improvement in resin fluidity and slipping character but also unexpected improvement in dispersibility of color substance, tinting strength. Nonionic surfactants are also preferred because of not affecting photographic film adversely, such as fogging and sensitivity derivation, being harmless to human, and exhibiting antistatic effect.

A suitable content of the lubricant varies according to the kind. In the case of the lubricants having a small lubricating ability, such as metal salts of fatty acids, a suitable content is 0.03 to 5 wt. %, preferably 0.05 to 3 wt. %, particularly preferably 0.1 to 1.5 wt. %. In the case of the lubricants having a great lubricating ability, being liable to bleed out, and affecting photosensitive materials, a suitable content is 0.01 to 1 wt. %, preferably 0.03 to 0.5 wt. %, particularly preferably 0.05 to 0.3 wt. %.

In the case or the photographic film containers, the lubricant improves slipping character, injection moldability, taking a photographic film in and out of the container, slipping during pneumatic transportation, preventing the generation or abrasion, and processing and packaging ability. Moreover, it improves mold releasability, and prevents the generation of static electricity and the occurrence of blocking of both of pellets and containers. The dispersibility and kneading ability of the antioxidant, nucleating agent and light-shielding material are also improved. A suitable content of the lubricant is 0.01 to 5 wt. %. When the content is less than 0.01 wt. %, the effects of the lubricant are insufficient. When the content exceeds 5 wt. %, bleeding out problems occur. Molding troubles also occur due to screw slip in an extruder which varies the shot amount, and kneading ability with the polyolefin resin is also degraded. In the case of fatty amide lubricants which exhibit a great effect in the improvement in slipping character and in the shortening of injection molding cycle, a preferable content is 0.01 to 3 wt. %, and 0.01 to 1 wt. % is particularly preferred, in view of a sharp decrease of molding troubles and the prevention of bleeding out.

The antioxidant prevents thermal degradation of resin, oxidation of the dripproof substance, the lubricant, etc. Examples of the antioxidant are as follows:
Phenol Antioxidants:
6-t-butyl-3-methylphenol derivatives, 2,6-di-t-butyl-p-cresol-t-butylphenol, 2,2'-methylenebis-(4-ethyl-6-t-butylphenol), 4,4'-butylidenebis(6-t-butyl-m-cresol), 4,4'-thiobis(6-t-butyl-m-cresol), 4,4-dihydroxydiphenylcyclohexane, alkyl group-induced bisphenol, styrene group-induced phenol, 2,6-di-t-butyl-4-methylphenol, n-octadecyl-3-(3',5'-di-t-butyl-4'-hydroxyphenyl)propionate, 2,2'-methylenebis(4-methyl-6-t-butylphenol), 4,4'-thiobis(3-methyl-6-t-butylphenol, 4,4'-butylidenebis(3 methyl-6-t-butylphenol), stearyl-β-(3,5-di-5-butyl-4-hydroxyphenyl)propionate, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis [methylene-3-(3',5'-di-t-butyl-4'-hydroxyphenyl) propionate]methane, etc.
Ketone-Amine Condensae Antioxidants:
6-ethoxy-2,2,4-trimethyl-1,2-dihydroquinoline, polymers of 2,2,4-trimethyl-1,2-dihydroquinoline, trimethyldihydroquinoline derivatives, etc.
Arylamine Antioxidants:
Phenyl-α-naphthylamine, N-phenyl-β-naphthylamine, N-phenyl-N'-isopropyl-p-phenylenediamine, N,N'-diphenyl-p-phenylenediamine, N,N'-di-β-naphthyl-p-phenylenediamine, N-(3'-hydroxybutylidene)-1-naphtylamine, etc.
Imidazole Antioxidants:
2-mercaptobenzoimidazole, zinc salt of 2-mercaptobenzoimidazole, 2-mercaptomethylbenzoimidazole, etc.
Phosphite Antioxidants:
Alkyl-induced arylphosphite, diphenylisodecylphosphite, sodium phosphite salt or tris(nonylphenyl)phosphite, trinonylphenylphosphite, triphenylphosphite, etc.
Thiourea Antioxidants:
Thiourea derivatives, 1,3-bis(dimethylaminopropyl)-2-thiourea, etc.
Sulfur-Containing Antioxidants:
Dilaurylthiodipropionate, dimyristilthiodipropionate, laurylstearylthiodipropionate, distearylthiodipropionate, etc.
Other Antioxidants:
Those useful for air oxidation, such as dilauryl thiodipropionate, metal deactivators, etc.

Preferable antioxidants are phenol antioxidants, and particularly effective antioxidants are BHT, low volatile high molecular weight phenol antioxidants ("Irganox 1010", "Irganox 1076", trade names of Ciba-Geigy A.G., "Topanol CA", trade name of I.C.I., etc.), dilaurylthiodipropionate, distearylthiodipropionate, dialkylphosphate, etc. Two or more antioxidants may be combined. A suitable content of the antioxidant is 0.001 to 2 wt. %, preferably 0.01 to 0.5 wt. %. When the content is less than 0.001 wt. %, the blending effect is small. While, when the content is beyond 2 wt. %, photosensitive materials utilizing oxidation-reduction reaction is adversely influenced by antioxidant. When antioxidant is combined with carbon black, oxidation inhibition effect synergistically appears. The oxidation inhibition effect is particularly exercised by combining a phenol antioxidant, a phosphorous-containing antioxidant and carbon black. Besides, other antioxidants usable in the invention can be selected from those disclosed in "Plastic Data Handbook" (published by Kogyo Chosa Kai), pages 794-799, "Plastic Additives Data Collection" (published by Kagaku Kogyo). pages 327-329, "Plastic Age Encyclopedia, Advance Edition 1986" (published by Plastic Age), pages 211-212, etc.

The nucleating agent improves crystallization speed, shortening of molding cycle, rigidity, transparency resistance to deformation, and physical strength.

The organic nucleating agent includes carboxylic acids, dicarboxylic acids, their salts and anhydrides, salts and esters of aromatic sulfonic acids, aromatic phosphinic acids, aromatic phosphonic acids, aromatic carboxylic acids and their aluminum salts, metal salts of aromatic phosphoric acids, alkyl alcohols having a number of carbon atoms of 8 to 30, condensation products of a polyhydric alcohol and an aldehyde, and alkylamines. Examples are aluminum p-t-butylbenzoate, 1,3-benzylidenesorbitol, 1,3,2,4-dibenzylidenesorbitol, the di-substituted benzylidene-sorbitol represented by the following formula;

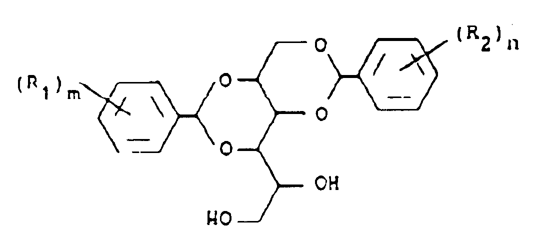

In the formula, R₁ and R₂ indicate an alkyl group or an alkoxy group having a number of carbon atoms of 1 to 8 or a halogen, and m and n are 0 to 3 and m+n≧1.
such as 1,3,2,4-di(methylbenzylidene)sorbitol, 1,3,2,4-di (ethylbenzylidene)sorbitol, 1,3,2,4-di(propylbenzylidene) sorbitol, 1,3,2,4-di(methoxybenzylidene)sorbitol, 1,3,2,4-di (p-methoxybenzylidene)sorbitol, 1,3,2,4-di (ethoxybenzyliene)sorbitol, 1,3,2,4-di(p-methylbenzylidene) sorbitol, 1,3,2,4-di(p-chlorobenzylidene)sorbitol, 1,3,2,4-di(alkylbenzylidene)sorbitol, 1,3,2,4-bis(methylbenzylidene)sorbitol, 1,3,2,4-di(p-hexylbenzylidene)sorbitol, 1,3,2,4-di(1-naphthalenecarbylidene)sorbitol, 1,3,2,4-di(phenylacetylidene)sorbitol, 1,3-heptanylidenesorbitol, 1,3,2,4-diheptanylidenesorbitol, 1,3,2,4-di(3-nonyl-3-pentenylidene)sorbitol, 1,3-cyclohexanecarbylidenesorbitol, 1,3,2,4-dicyclohexanecarbylidenesorbitol, 1,3,4,2-di(p-methylcyclohexanecarbylidene)sorbitol, metal salts, such as calcium salt and magnesium salt, of stearyl lactic acid, the compounds, such as N-(2-hydroxyethyl)stearylamine, represented by the following formula;

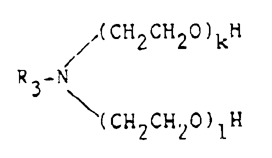

In the formula, R₃ indicates an alkyl group having a number of carbon atoms of 8 to 30, and k and 1 are 0 to 10 and k+1≧1.
metal salts, such as lithium salt, sodium salt, potassium salt, calcium salt and magnesium salt, of 1,2-dihydroxystearic acid, stearyl alcohol, lauryl alcohol, sodium benzoate, benzoic acid, and sebacic acid.

Inorganic nucleating agent includes an alkali metal hydroxide such as lithium hydroxide, sodium hydroxide and potassium hydroxide, an alkali metal oxide, such as sodium oxide, an alkali metal carbonate, such as lithium carbonate, sodium carbonate, potassium carbonate, sodium hydrogencarbonate and potassium hydrogencarbonate, an alkaline earth hydroxide, such as calcium hydroxide, magnesium hydroxide and barium hydroxide, an alkaline earth oxide, such as calcium oxide, and an alkaline earth carbonate, such as calcium carbonate.

The nucleating agent is not limited to the above compounds, and any known nucleating agent may be employed. Morover, two or more nucleating agents may be used simultaneously.

Preferable nucleating agents are dibenzylidene sorbitol compounds and aluminum benzoate because of not affecting photographic film adversely but exercising a great nucleating action.

The organic nucleating agent may be used alone, or two or more organic nucleating agents may be combined. The organic nucleating agent may be combined with an inorganic nucleating agent. The surface of the organic nucleating agent may be coated with various fatty acids, fatty acid compounds, coupling agents, surfactants or the like.

The content of the organic nucleating agent is 0.01 to 3 wt. %, preferably 0.03 to 2 wt. %, particularly preferably 0.05 to 1 wt. %. When the content is less than 0.01 wt. %, the effect of the nucleating agent is insufficient. While, when the nucleating agent is added beyond 2 wt. %, the effect of the excess amount of the nucleating agent is minor. According to the kind of the nucleating agent, it adversely affects photographic film, adheres to mold, bleeds out, decreases dropping strength, or the like. In the case of the nucleating agent having a great nucleating effect and being liable to induce the problems of bleeding out, foaming, a preferable content is 0.05 to 0.5 wt. %.

As the method of blending the nucleating agent, there are the compound method, the dry blending method, the masterbatch method, and the like, and the masterbatch method is preferred. Since the nucleating agent is bulky and tends to fly away, to blend a small amout of dispersing agent or wetting agent is preferred. Suitable dispersing agents include carboxylic acid anhydrides, higher fatty acids, etc., and lubricants such as various fatty acid metal salts, various silicones and oleic amino are particularly preferred. As the wetting agent, plasticizers such as DOP and DHP can be used.

It is also preferred to prevent the bleeding out by coating or blending a fatty acid or a fatty acid compound, such as a higher fatty acid, a fatty acid amide or a fatty acid metal salt onto or with the organic nucleating agent. Furthermore, the blending effect of the nucleating agent is improved by using in a form of pellets formed by blending with a polyolefin resin having a heat history at higher than 180°C, preferably higher than 190°C, particularly preferably higher than 200°C. By blending these additives, white powder generation caused by abrasion can be decreased by increasing rigidity, and white powder generation caused by crystallization or bleeding out of the organic nucleating agent can also be decreased. Moreover, uncomfortable odor of the organic nucleating agent is prevented, and mold releasability, antistatic ability and antiblocking ability are improved.

The resin composition of clip invention may contain an absorbent of the lubricant, the antioxidant or the organic nucleating agent. Examples of the absorbent are described below.
Oxides ... silica, diatomaceous earth, alumina, titanium dioxide, iron oxide, zinc oxide, magnesium oxide, antimony oxide, barium ferrite, strontium ferrite, beryllium oxide, pumice, pumice balloon, alumina fiber, etc.
Hydroxides ... aluminum hydroxides, magnesium hydroxides, basic magnesium carbonate, etc.
Carbonates ... calcium carbonate, magnesium carbonate, dolomite, etc.
Sulfates, sulfites ... calcium sulfate, barium sulfate, ammonium sulfate, calcium sulfite, etc.
Silicates ... talc, clay, mica, asbestos, glass fiber, glass balloon, glass bead, calcium silicare, montmorillonite, bentonite, etc.
Carbons ... carbon black, graphite, carbon fiber, carbon hollow bead, etc.

Among them, preferred absorbents make opaque, and light-absorptive carbon black, titanium nitride and graphite are particularly preferred because of being excellent in heat resistance and light resistance and being relatively inactive.

Carbon black are divided into gas black, furnace black, channel black, anthracene black, acetylene black, Ketchen carbon black, thermal black, lamp black, vegetable black and animal black according to their origin. Among these, oil furnace carbon black is preferable in terms of light-shielding character, cost and improvement of properties. On the other hand, since acetylene black and Ketschen carbon black have an antistatic character, they are also preferable, though they are expensive. They may be blended to the oil furnace black in order to improve its character. Though, there are various blending method, the masterbatch method is preferred in view of cost and less contamination of the working place. Japanese Patent KOKOKU No. 40-26196 discloses a method of making a masterbatch of polymer-carbon black by dissolving the polymer in an organic solvent and dispersing the carbon black into the solution. Japanese Patent KOKOKU No. 43-10362 discloses another method of making a masterbatch by dispersing the carbon black into polyethylene.

A suitable content of the absorbent is 0.01 to 30 wt. %, prefeably 0.1 to 15 wt. %, further preferably 0.5 to 10 wt. %. A preferred content is more than the content of the additive which is liable to bleed out.

A light-reflective light-shielding material has an effect upon the improvement in printability appearance and prevention of heat deformation and temperature variation in the sunlight, and may be added to the photographic container. The light-reflective light-shielding material includes aluminum powder, aluminum paste, aluminum flake, titanium dioxide, calcium sulfate, barium sulfate, talc, clay, mica, stainless steel powder, starch, tin powder, pearl pigment, zinc oxide, potassium titanate, glass bead, etc. Two or more light-reflective light-shielding materials may be combined, or another dye may be added. The light-reflective light shielding material may be treated with various surface treatment. The content of the light-reflectrive light-shielding material is preferably 0.01 to 30 wt. %. When the content is less than 0.01 wt. %, the blending effect is insufficient. When the content exceeds 30 wt. %, the blending effect increases little. Resin fluidity is degraded, and short shot and weld line troubles increase. Appearance is degraded, and dropping strength is lowered.

The antifog action and dripproof action are exercised more effectively by providing the container for a photographic film containing the dripproof substance with the surface activation treatment, such as corona discharge, ozone treatment or plasma treatment.

The packaging material for photosensitive materials of the invention is suitable for packaging the following photographic materials.
Silver halide photographic photosensitive materials: films for printing, color photographic printing papers, color films, master papers for printing, DTR photosensitive materials, films and papers for computerized type-setting system, microfilms, films for movie, self-developing type photographic photosensitive materials, direct positive films and papers, etc.
Heat developing photosensitive materials: heat developing color photosensitive materials, heat developing monochromatic photosensitive materials, e.g. disclosed in Japanese Patent KOKOKU Nos. 43-4921, 43-4924, "Shashinkogaku-no-Kiso (Fundamentals of Photographic Engineering), Vol. Silver Salt Photograph", pp 553-555, Corona, 1979, "Research Disclosure", pp 9-15 (RD-17029), June, 1978, transfer-type heat developing color photosensitive materials disclosed in Japanese Patent KOKAI Nos. 59-12431, 60-2950, 61-52343, USP 4,584,267, etc.
Photosensitive heatsensitive recording materials: recording materials using photothermography (photosensitive heatsensitive image forming method) disclosed in Japanese Patent KOKAI No. 3-72358.
Diazonium photographic photosensitive materials: 4-morpholinobenzene diazonium microfilms, microfilms, copying films, form plates for printing, etc.
Azide, diazide photographic photosensitive materials: photosensitive materials containing parazidobenzoate, 4,4'-diazidostilbene, etc., such as copying films and form plates for printing etc.
Quinone diazide photographic photosensitive materials: photosensitive materials containing ortho-quinone diazide compounds or ortho-naphthoquinone diazide compounds, such as benzoquinone-(1,2)-diazido-(2)-4-sulfonic acid phenyl ether, such as form plates for printing, copying films and contact printing film, etc.
Photo polymers: photosensitive materials, form plates for printing, contact printing films, containing vinyl compound monomer, etc.
Polyvinyl cinnamate esters: printing films, photoresists for IC, etc.

Moreover, the packaging material of the invention is also applicable to various photosensitive materials degraded or denatured by light, oxygen, sulfur dioxide gas or the like, such as foods including peanuts with butter, margarine, snacks, relishs, cakes, teas and lavers, medicines including powder and granular medicines placed in a bag for stomach and bowels and for cold, dyes, pigments, photographic developing agent, photographic fixing agent, toners and the like.

The packaging material for photosensitive materials of the invention is used, for example, in the following forms:
Packaging films; packaging bags, such as unipack bag, single sheet flat bag, double sheet flat bag, single sheet gusset bag, double sheet gusset bag, shrink packaging, seembly packaging, etc.

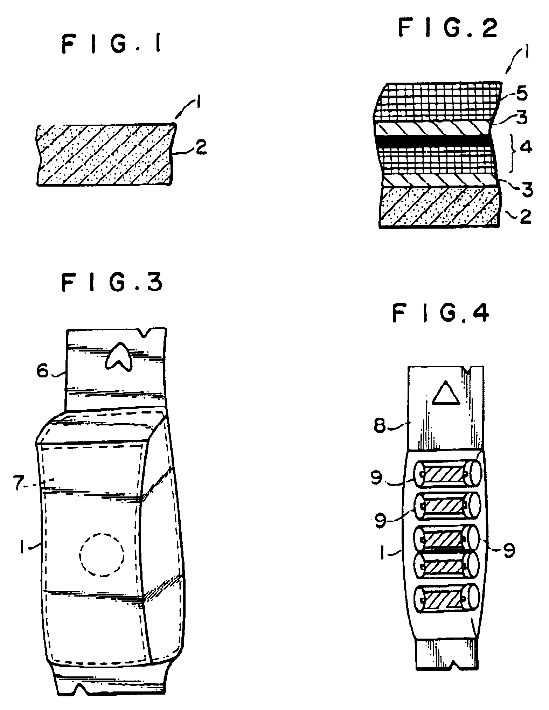

Figure 1 is a partial section of a packaging film 1 which is a single layer film consisting of a dripproof film 2 formed of the resin composition of the invention alone.

Figure 2 is a partial section of another packaging film 1 consisting of a dripproof film 2 formed of the resin composition of the invention, a metallized flexible sheet layer 4 laminated thereon through an adhesive layer 3, and a flexible sheet layer 5 further laminated thereon through an adhesive layer 3.

Figure 3 shows a photographic film unit with lens 7 put on a mount 6 and wrapped by the packaging film 1.

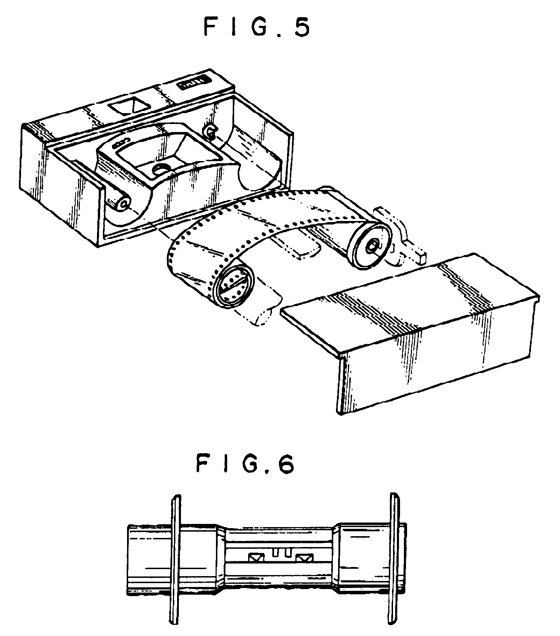

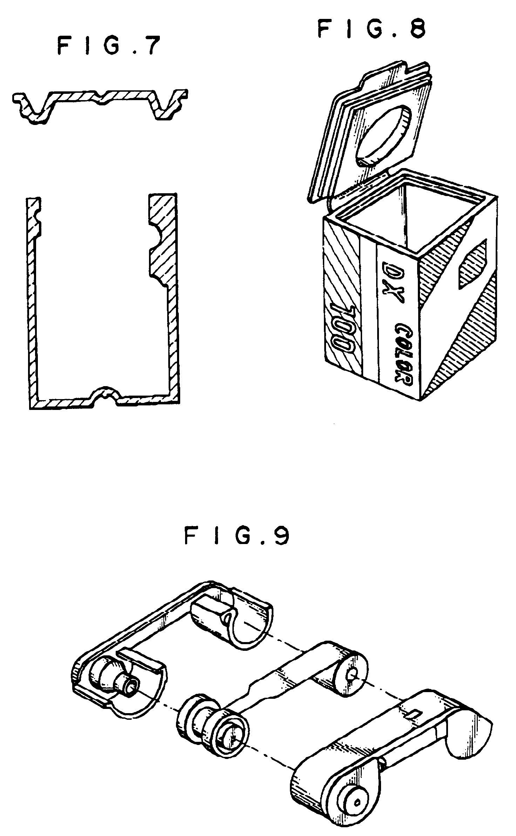

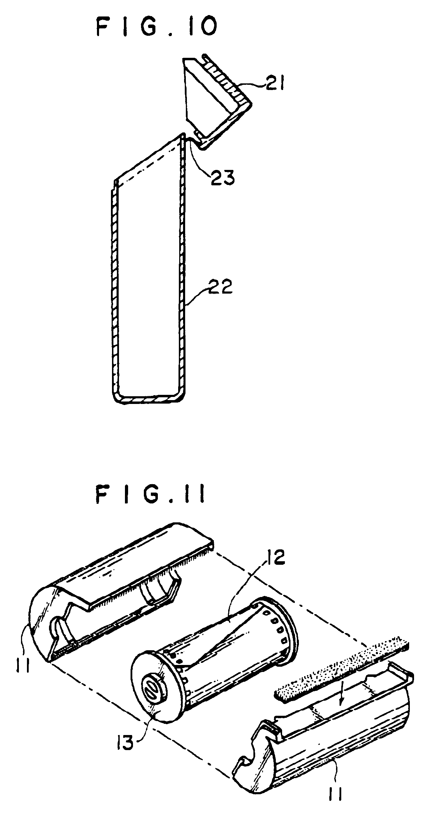

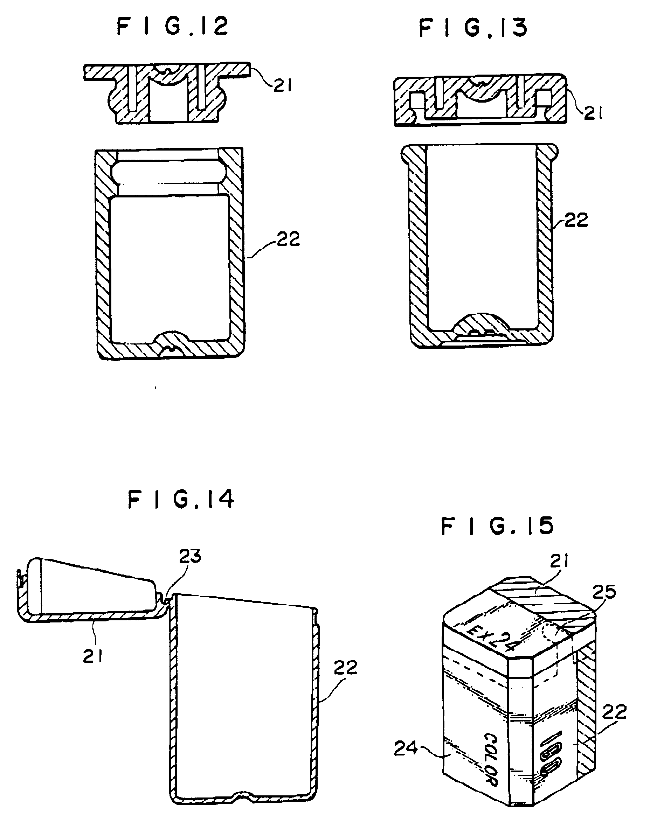

Figure 4 shows several containers 9 containing a photographic film arranged in a row on a mount 8 and wrapped by the packaging film 1.
Injection-molded articles: spool for photographic film, film unit with lens, container for photographic film cartridge, light-shielding container, cartridge for photographic film, light-shielding magazine for light room loading, core, photographic film cartridge, pack for instant film, etc.
Cartridge for disc film: Japanese Utility Model KOKAI No. 60-21743, etc.
Light-shielding teremp cloth: Japanese Patent KOKAI Nos. 63-49756, 62-286042, etc.
Film unit with lens: Japanese Patent KOKAI No. 63-226643 (Figure 5)
Spool for photographic film: Japanese patent KOKAI Nos. 1-251030, 57-196218, 59-15049, 58-203436, 58-82237, 58-82236, 62 240957, Japanese Utility Model KOKAI Nos. 63-73742, 54-120931, 58-178139-178145, 63-73742, Japanese Utility Model KOKOKU Nos. 55-31541, 44-16777, USP 1,930,144, GB 2199805A (Figure 6)
Cartridge for photographic film: Japanese Patent KOKAI Nos. 54-111822, 50-33831, 56-87039, 1-312538, 57-190948, Japanese Patent KOKAI Nos. 45-6991, 55-21089, Japanese Utility Model KOKAI No. 55-97738, USP 4,846,418, USP 4,848,693, USP 4,887,776, etc. (Figure 11)
Container for photographic film cartridge: Japanese Patent KOKAI Nos. 61-250639, 61-73947, 63-121047, 62-291639, Japanese Utility Model KOKAI Nos. 60 163451, 1-88940, 1-113235, USP 4,801,011 (Figures 7, 8)
Core, Reel: Japanese Utility Model KOKAI No. 60-107848, USP 4,809,923, GB 2,033,873 B, etc.
Magazine for sheet films: Japanese Utility Model KOKAI No. 56-5141, etc.
Photographic film cartridge: Japanese Patent KOKAI No. 1-312537, Japanese Utility Model KOKAI Nos. 2-24846, 2-29041, 60-120448, Japanese Utility Model KOKOKU No. 56-16610, etc. (Figure 9)
Photographic film case: Japanese Utility Model KOKAI No. 54-100617, USP 4,779,756, etc. (Figure 10)
Some containers for a photographic film are illustrated in Figures 10, 12-19.

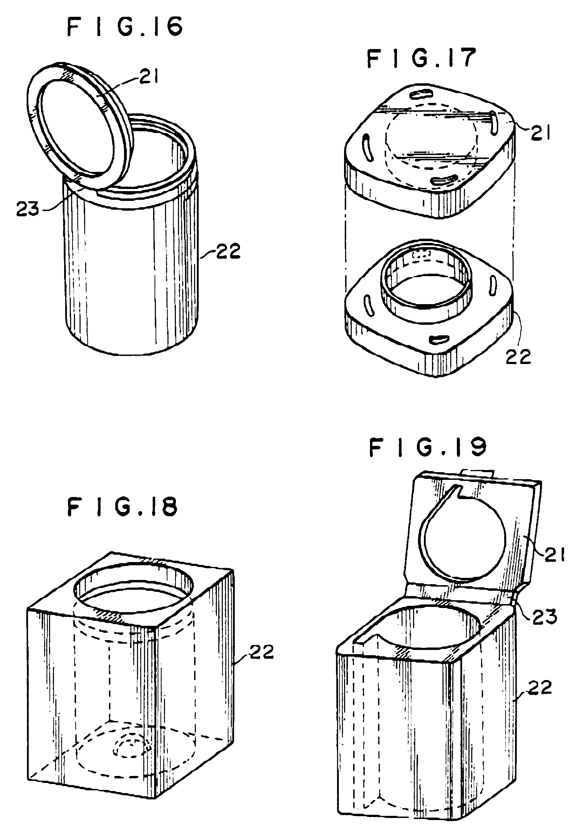

The containers for a photographic film of Figures 12 and 13 are in a type of fitting the cap 21 to the container body 22. In the container of Figure 14, the cap 21 is connected to the container body 22 through a hinge portion 23 (Japanese Patent KOKAI No. 63-223640, etc.). In the container of Figure 15, the cap 21 is connected to the container body 22 through a hinge portion (not shown) and wrapped by a shrinkable film 24 with printing. In the shrinkable film 24, a tab portion 25 is formed by a perforation line. The container of Figure 16 is also in a type that the cap 21 is connected to the container body 22 through a hinge portion 23. The container of Figure 10 is for a microfilm, and the cap 21 is connected to the container body 22 through a hinge portion 23. The container of Figure 17 is in a lock fitting type of the cap 21 to the container body 22. Figure 18 illustrates a container body of which the outside is rectangular and the inside is cylindrical. The container of Figure 19 has a rectangular outside and a cylindrical inside, and the inside has a beak channel for placing the film exit portion of a magazine.

The above resin composition for forming the container for a photographic film is also applicable to various molded articles for magnetic materials, such as book case for VTR, case for floppy discs, container for cassettes and cartridge, various molded articles for photosensitive materials, such as light room loading magazine, core, spool, cartridge, plastic photographic film cartridge. light-shielding case for disc microfilms in a type of fitting the cover to the case body, film pack and bushing, and various molded articles for other uses, such as foods, electrical apparatuses, automobile parts and parts for house, and the like.

The photographic film put in the container for a photographic film includes commercial 35 mm negative films placed in a metal cartridge where the leading end is projected from the film exit, the 35 mm negative films, microfilms (negative and positive) and films for movie (negative and positive) placed in a plastic cartridge entirely including the leading end and the leading end being delivered by the rotation of spool, i.e. the leading end is also put in the cartridge in the non exposed conditions to the light, disclosed in Japanese Patent KOKAI Nos. 2-272538, 3-37645, 3-126029, USP 4,634,306, etc.

It is preferred that the container for a photographic film has a bending elastic modulus of more than 5000 kg/cm². When the bending elastic modulus is less than 5000 kg/cm², the occurrence of deformation increases during injection molding. The molding cycle is lengthened to lower the productivity. Particularly, injection molding is impossible, unless lubricant is blended. In the case that the lubricant is not a fatty amide lubricant, the blending amount must be more than 0.2 wt. % for multicavity injection molding, and the occurrence of deformation is still a lot. In the case of the containers having a hinged cap as shown in Figures 8, 10, 14-16 and 19, a suitable Olsen rigidity is more than 3,350 kg/cm², preferably more than 4,500 kg/cm², and less than 17,000 kg/cm², preferably less than 15,000 kg/cm² in view of hinge ability and fitting sealability.

### EXAMPLES

### Example 1

A polyolefin resin composition having a MFR of 2.6 g/10 minutes was prepared containing 1.0 wt. % of glycerine monooleate ester and 1.0 wt. % of diglycerine sesquiolcate as the dripproofing agent, 0.10 wt. % of erucic amide as the lubricant, 0.1 wt. % of 2,6-di-t-butyl-p-cresol as the phenolic antioxidant, 0.15 wt. % of 1,3,2,4-dibenzylidene sorbitol as the organic nucleating agent, 3 wt. % of oil furnace carbon black as the absorbent for the bleeding out additives, 15 wt. % of low density homopolyethylene resin produced by the high pressure radical polymerization and the other being ethylene-4-methylpentene-1. A light-shielding film 70 µm thick was prepared by the inflation process using the above resin composition.

A light-shielding bag was prepared by the light-shielding film, and a roll of printing paper is put therein followed by sealing. The light-shielding bag was stored in a cold storage room at 10°C for one month, and then transferred to a developing room at 23°C. The light-shielding bag was allowed to stand in the developing room for three hours, and then the bag was opened. Adhesion of water drops was not found by the visual observation of the inside of the bag.

Sealed light-shielding bags were prepared using the above light-shielding film, and allowed to stand in a high temperature high humidity room at 35°C, 85 % RH for one month. Then, the inside and outside of the bag were observed, and confirmed that the generation of white powder did not occur.

### Comparative Example 1

A resin composition was prepared which was the same as Example 1 except that the dripproofing agent of glycerine monooleate ester and diglycerine sesquioleate were not added. A light-shielding film 70 µm thick was prepared by the inflation process using the above resin composition.

The water drop deposition test was conducted in the same manner as Example 1, and water drops were observed on both of the inside and outside of the bag. The white powder generation test was also conducted in the same manner as Example 1, and the occurrence of uneven gloss was observed. Partially thin white powder was also observed. That is, although the resin composition had various modification effects, it was liable to bleed out. Water drops and white powder were formed due to the uneven bleeding out, and therefore, the light-shielding fim has a problem as the packaging material for photographic photosensitive materials.

### Example 2

A resin composition was prepared containing 80 wt. % of propylene-ethylene random copolymer resin having a MFR of 35 g/10 minutes, a density of 0.90 g/cm³, a bending elastic modulus (ASTM D-790) of 11,300 kg/cm², a notched Izod impact strength at 23°C (ASTM D-256) of 3.6 kg·cm/cm², a Rockwell hardness (ASTM D-785) of 88 R and an ethylene content of 2.7 wt. %, 1.0 wt. % of dimethylpolysiloxane having a viscosity of 10,000 centi stokes, 0.15 wt. % of 1,3,2,4-di(methylenebenzylidene)sorbitol as the organic nucleating agent, 0.1 wt. % of tetrakis[methylene-3-(3',5'-di-t-butyl-4'-hydroxyphenyl)propionate]methane, 19.00 wt. % of propylene-ethylene block copolymer resin having a MFR of 27 g/10 minutes, a density of 0.90 g/cm³, a bending elastic modulus of 12,100 kg/cm², an Izod impact strength at 23°C of 5.7 kg. cm/cm² and an ethylene content of 3.7 wt. %, and 0.3 wt. % of glycerine monostearate and 0.45 wt. % of diglycerine sesquioleate as the dripproofing agent. Container bodies for a photographic film in a cap fitting type shown in Figure 7 wre molded at a resin temperature of 220°C using a toggle type injection moding machine ("NETSTAL", Sumitomo Heavy Ind.) at a mold clamping pressure of 150 t. The mold was in a hot runner type, and the number of cavities was 24.

The container bodies were sharply improved in the low temperature impact strength, and transparency and the whitening by impact were in a practical level. When they were taken out from a cold storage room, water drops did not adhere to the side wall of the container bodies. White powder did not adhere to the leading end of the photographic film. Injection molding cycle was less than 10 seconds, and mold troubles occurred rare.

### Example 3

A high density polyethylene resin composition was prepared containing 90.8 wt. % of high density polyethylene resin having a MFR of 14.0 g/10 minutes and a density of 0.965 g/cm³, 1.0 wt. % of sorbitan monostearate ester and 0.5 wt. % of sorbitan sesquipalmitate as the dripproofing agent, 2.0 wt. % of dimethylpolysiloxane having a viscosity of 20,000 centi stokes, 0.2 wt. % of calcium stearate, 0.2 wt. % of 5,8-dimethyl-tocotrienol, 0.05 wt. % of oleic amide, 0.25 wt. % of oil furnace carbon black and 5 wt. % of talc having a mean particle size of 2.2 µm. Spools for a photographic film shown in Figure 6 were molded using the above resin composition by an injection molding machine at a mold claimping pressure of 150 t. A 36 exposures 35 mm photographic film was wound around the spool, and put in a plastic cartridge. The plastic cartridges were last in the sunlight of 80,000 luxes for 30 minutes. Then, the photographic films were developed, and found that fogging did not occur. Light-shielding ability could be ensured even when the amount of oil furnace carbon black was decreased from 0.3 wt. % to 0.25 wt. % compared with Example 1.

The spool was improved in slipping character compared with conventional polystyrene spool. Water drops did not adhere, and film winding torque was small. Wear resistance was also excellent. Winding up troubles of photographic film in a camera did not occur, and white powder due to bleeding out of additives was rare.

### Example 4

A high density polyethylene resin composition was prepared containing 91.4 wt. % of high density polyethylene having a MFR of 6.0 g/10 minutes and a density of 0.968 g/cm³, 1 wt. % of sorbitan palmitate propylene oxide 3 moles adduct as the dripproofing agent, 2.0 wt. % of dimethylpolysiloxane having a viscosity of 10,000 centi stokes, 0.1 wt. % of calcium stearate, 0.2 wt. % of 5,8-dimethyl-tocotrienol, 0.05 wt. % of hexamethylenebisoleic amide, 0.25 wt. % of oil furnace carbon black and 5 wt. % of talc having a mean particle size of 2.2 µm. Container for a photographic film cartridge shown in Figure 7 were molded using the above resin composition by an injection molding machine at a mold clamping pressure of 150 t.

The containers for a photographic film were improved in the color density compared with Example 1, and light-shielding ability could be ensured even when the content of carbon black was decreased from 0.3 wt. % to 0.25 wt. %. They were excellent in moldability, and the occurrence of deformation, such as buckling, was rare, even when the cooling time was shortened. Water drops did not form, when they were taken out of a cold storage room, and white powder due to bleeding out of additives was rare.

### Example 5

A polystyrene resin composition having a MFR of 10.7 g/10 minutes was prepared containing 1.0 wt. % of glycerine monooleate ester and 1.0 wt. % of diglycerine sesquioleate as the dripproofing agent, 0.1 wt. % of erucic amide and 1.0 wt. % of dimethylpolysiloxane having a viscosity of 20,000 centi stokes as the lubricant, 0.2 wt. % of 5,8-dimethyltocotrienol as the antioxidant, 0.3 wt. % of oil furnace carbon black and 0.2 wt. % of calcium carbonate as the absorbent, and 5.0 wt. % if polybutadiene rubber. Using the above resin composition, cartridge bodies of a photographic film cartridge shown in Figure 11 were molded by an injection molding machine at a mold clamping pressure of 150 t. The cartridge body was composed of 2 light-shielding cassette shells 11,11, and a spool 13, on which a photographic film 12 was wound, was placed therein rotatably. An exit of the photographic film was provided in a form of slit.

The cartridge bodies were improved in the color density by 15 %, and the light-shielding ability was increased. The traveling ability of photographic film was excellent, and injection moldability was also excellent. Water drops did not adhere, when they were taken out of a cold storage room, and white powder due to the bleeding out of additives was observed rarely.

### Example 6

A polypropylene resin composition was prepared containing 99.27 wt. % of propylene-etyylene random copolymer resin having a MFR (ASTM D-1238) of 35 g/10 minutes, a density (ASTM D-1505) of 0.90 g/cm³, a bending elastic modulus of 11,300 kg/cm², a notched Izod impact strength at 23°C of 3.6 kg·cm/cm², A Rockwell hardness of 88 R and an ethylene content of 2.7 wt. %, 0.05 wt. % of bis fatty amide, 0.33 wt % of a mixture of glycerine monostearate and glycerine distearate, 0.15 wt. % of N,N'-bis(2-hydroxyethyl)stearylamine, 0.1 wt. % of 1,3,2,4-di(methylbenzylidene)sorbitol, and 0.1 wt. % of tetrakis[methylene-3-(3',5'-di-t-butyl-4'-hydroxyphenyl) propionate]methane. Using the above resin composition, container bodies for a photographic film cartridge shown in Figure 12 were molded at a resin temperature of 210°C by an injection moding machine ("NESTAL", Sumitomo heavy Ind.) at a mold clamping pressure of 150 t. The mold was a hot runner type, and the number of cavities was 29.

The container bodies were excellent in transparency, and the photographic film cartridge put therein was clearly observed from the outside of the contained. Even when they were left in the sunlight for a long period, water drops did not form. When they were stored at a temperature of lower than 15°C, such as in a cold storage room, a cold container or a home refrigerator for a long period, and then they were taken out to the outside at a temperature of higher than 20 °C, water drops did not form, and transparency was not lost. Moreover, they were excellent in physical strength and wear resistance. Molding cycle could be shortened sharply, and they had antistatic ability.

### Example 7

A white polypropylene resin composition was prepared containing 82.6 wt. % of homopolypropylene resin having a MFR of 10 g/10 minutes, a density of 0.90 g/cm³, a bending elastic modulus of 15,200 kg/cm², a notched Izod impact strength at 23°C of 1.9 kg·cm/cm² and a Rockwell hardness of 95 R, 0.1 wt. % of oleic amide, 0.2 wt. % of glycerine monostearate, 5 wt. % of starch of which the surface was treated with silicone, 10 wt. % of propylene block copolymer resin having a MFR of 25 g/10 minutes, a density of 0.91 g/cm³, a bending elastic modulus of 8,900 kg/cm² and a notched Izod impact strength at 23°C of 6.2 kg·/cm/cm², 0.1 wt. % of tetrakis[methylene-3-(3',5'-di-t-butyl-4'-hydroxyphenyl)propionate]methane and 2 wt. % of titanium dioxide. Using the above resin composition, container bodies for a photographic film cartridge shown in Figure 12 were molded in the same method as Example 6.

When the container bodies were left in the sunlight, water drops did not form on the inner wall of the container body. When they were stored at lower than 15°C for a long period, and then taken out to the outside at higher than 20 °C, water drops did not form. The container bodies did not form figging nor sensitivity deviation of photographic film, and were excellent in physical strength, rigidity, whiteness, wear resistance, low temperature impact strength, etc. Molding cycle was short, and molding troubles were rare. Since they were white, they were excellent in printability including transferability and appearance. They had thrownability, because they graudally collapsed naturally by leaving for a long period.

### Example 8

Containers for a photographic film of Figure 19 were molded using the polypropylene resin composition of Example 7, and a 35 mm negative film, put in a photographic film cartridge which was arranged so that the entire photographic film including the leading end was wound in the cartridge and the photographic film could be delivered by rotating spool, was put in each container. The cap 21 was closed, and as shown in Figure 15, the container was wrapped with a polypropylene resin shrinkable film printed with kind, CI mark, instruction, bar code, and the like by multicolor printing so as to ensure original seal proof, appearance, quality guarantee, gas barrier, moistureproofness, sealability, etc.

The packages were not deformed even left in the sunlight, and water drops did not form on the surface of the container. When they were stored in a cold storage room at about 10°C for a long period and then taken out, water drops did not form. Accordingly, in the package, a decorated casket which is used in the conventional package is not necessary, and waste materials can be reduced after use. The recycling of the container is possible by blending with the shrinkable film, and the container can be colllapsed naturally by leaving for a long period.

### Comparative Example 2

A polypropylene resin composition was prepared containing 99.85 wt. % of the same propylene-ethylene random copolymer as employed in Example 6, 0.05 wt. % of bis fatty amide and 0.1 wt. % of 1,3,2,4-di(methylbenzilidene) sorbitol. Using the above resin composition, the container bodies for a photographic film cartridge were molded in the same method as Example 6.

The container bodies for a photographic film cartridge were fogged on the inside by taking out from the place at lower than 15°C to the place at higher than 20°C, the indications of the photographic film cartridge became difficult to be seen. Coloring troubles, yellowing troubles and generation of static electrification were liable to occur.

### Example 9

A propylene-ethylene random copolymer resin composition was prepared containing 60 wt. % of propylene-ethylene random copolymer resin having a MFR of 45 g/10 minutes, a density of 0.90 g/cm³, a bending elastic modulus of 8,900 kg/cm² and an ethylene content of 3.2 wt. %, 38.9 wt. % of propylene-ethylene block copolymer resin having a MFR of 20 g/10 minutes, a density of 0.90 g/cm³, a bending elastic modulus of 13,200 kg/cm² and an ethylene content of 21. wt. %, 0.10 wt. % of oleic amide as the lubricant, 0.2 wt. % of stearic acid monoglyceride as the dripproofing agent, 0.1 wt. % of 1,3,2,4-di(methylbenzylidene)sorbitol as the organic nucleating agent, 0.2 wt. % of calcium carbonate particulates as the inorganic nucleating agent combined with the light-reflective light-shielding material, 0.3 wt. % of titanium dioxide as the light-reflective light-shielding material and 0.10 wt. % of a phenol antioxidant ("IRGANOX 1010", Ciba-Geigy) and 0.10 wt. % of a phosphorus-containing antioxidant ("IRGANOX 168", Ciba-Geigy) as the antioxidant. Using the above resin composition, containers for a photographic film of Figure 14 were molded at the resin temperature of 200°C by the same molding machine as Example 6, and a most common 35 mm negative film put in a metal cartridge of which the leading end was extended was put in each container. Then, as shown in Figure 15, the container was wrapped by a polyester resin shrinkable film printed with kind, CI mark, instructions, bar code and the like by multicolor printing so as to ensure original seal proof, appearance, quality guarantee, gas barrier, moistureproofness, sealability, etc.

The packages were not deformed even left in the sunlight, and water drops did not form on the surface of the container. When they were stored in a cold storage room at about 10°C for a long period and then taken out, water drops did not form. Degradation in quality of photographic film was small under anyone of the above conditions. Accordingly, in the package, a decorated casket which is used in the conventional package is not necessary, and industrial waste materials can be reduced. The recycling of the container is possible, because the cap was the same material as the container body. Moreover, the container for a photographic film was not broken, even when it was dropped from 5 m height to a concrete floor at -5°C in a state containing a photographic film cartridge. Whitening was inconspicuous, and there is no problem in a practical viewpoint. They were excellent in injection moldability, and molding cycle could be shortened to one fifth compared with Comparative Example 3 not containing the essential additives in the invention. Molding troubles, such as deformation and short shot were shaply decreased to less than 1/100 of Comparative Example 3.

### Comparative Example 3

A resin composition was prepared containing 60 wt. % of the same propylene-ethylene random copolymer resin and 40 wt. % of the same propylene-ethylene block copolymer resin as Example 9 but containing no additive. Using the above resin composition, container for a photographic film shown in Figure 14 were molded by the same method as Example 9. Into each container, the same 35 mm negative film put in a metal cartridge was put, and the container was wrapped by the same shrinkable film.

Even the package was left in the sunlight for a long period, it was not deformed, but the photographic film cartridge was heated, and water drops were adhered to the inner wall of the container. The quality of the photographic film was degraded. Besides, when the container was taken out after storing in a cold storage room at about 10°C, water drops were formed on the inside and outside of the container. When the container was dropped from 5 m height to a concrete floor at -5°C in a static containing a photographic film cartridge, about 3 % of the containers were broken. Whitening occurred in all containers at the impact portion, and the quality as goods was lost. There was also a problem in injection molding, and blocking of resin pellets and molded containers occurred. Molding cycle was 5 times as long as Example 9, and the occurrence of molding troubles, such as deformation and short shot, were 100 times as many as Example 9.

### Example 10

100 parts by weight of the polypropylene resin composition of Example 6 was blended with 10 parts by weight of a carbon black masterbatch resin composed of 40 wt. % of oil furnace carbon black and 60 wt. % of modified ethylene-butene-1 copolymer resin modified by graft polymerization of unsaturated carboxylic acid to obtain a black polypropylene resin composition. Using the above resin composition, container bodies for a photographic film cartridge were molded by the same method as Example 6.

The container bodies were excellent in dripproof ability similar to Example 6. When the container was dropped from 5 m height to a concrete floor at -5°C in a state containing a photographic film cartridge, 5 % of the containers were broken. Since the broken rate of Example 6 was 25 %, it was decreased to 1/5. Wear resistance was improved. Since the lubricant, the antioxidant and the nucleating agent which are liable to bleed out were adsorbed by carbon black, white powder generation due to the bleeding out of them was decreased to the degree of not able to be observed. Injection molding cycle was sharply shortened. The container body was excellent in antistatic ability and light shielding ability, and was very suitable for high sensitivity photographic films.

### Comparative Example 4

The same resin composition, molding machine and mold as Example 6 were used, and container bodies shown in Figure 12 were molded by the same method as Example 6 except that the resin temperature was 170°C.

Since the resin composition did not pass a heat history at higher than 180°C, nucleation effect by the organic nucleating agent of 1,3,2,4-di(methylbenzylidene)sorbitol was not exercised. As a result, the fluidity of molten resin was degraded, and crystallization rate was lowered. Transparency was reduced, and rigidity was lowered. Good product molding became impossible, unless injection pressure was elevated about 20 %. Molding cycle was lengthend to 1.5 times as long as Example 6, and molding troubles, such as deformation, short shot and gate remainder, increased more than ten times as many as Example 6. The dropping strength from 5 m height was sharply decreased due to the strong formation of weld lines, and the broken rate was 42 %. Rockwell hardness was also decreased, and bleeding out of additives increase resulting in the generation of white powder.

Preferred embodiments of the container for a photographic film cartridge satisfy the scope of claim, and are possible to reduce industrial waste amount and to recycle. In this viewpoint, with respect to the resin composition of the container body and cap:
a) Using the same resin composition.
b) Containing more than 50 wt. %, preferably more than 60 wt. %, more preferably more than 70 wt. % in the sum of polyolefin resin, such as homopolypropylene resin, propylene-ethylene random or block copolymer resin, propylene-α-olefin (C₄-C₁₂) copolymer resin, homopolyethylene resin (low, medium, high density), ethylene-α-olefin (C₃-C₁₂) copolymer resin, polyolefin elastomer, poly-α-olefin (C₄-C₁₂) resin, ethylene-vinyl acetate copolymer resin, ethylene-alkyl ester copolymer resin, and any blend resin thereof, and the necessary additives.
c) Satisfying a) or b) and unifying the color to noncoloring, white, silver, yellw, green, black or the like.
d) When the resin composition of the cap is made different from the container body, the rigidity of the container body the rigidity of the cap, in view of the protection of photographic film cartridge and the improvement in sealability. Preferably, the rigidity of the container body is rendered more than 1.5 times, preferably more than 2 times as much as the cap.
e) Blending a known additive in order to facilitate biodegradation, thermal decomposition or decomposition by UV rays.

With respect to appearance:
1) Composed of a circular cylindrical container body and a cap fitting to seal the container body.
2) Composed of a rectangular cylindrical container body and a cap fitting to seal the container body.
3) Composed of a polygonal cylindrical container body and a cap fitting to seal the container body.

In order to limit the package to the container of 1) to 3) and to discontinue the conventional decorated casket;
i) Wrapping the container body and the cap by a shrinkable film, whcih is provided with coloring, printing or coating or depositing a material exhibiting the action shown below, in order to achieve the objects, such as to ensure original seal proof, to improve moistureproofness or gas barrier or to shield or reduce UV rays or light.
ii) To adhere a label printed with letters and design printed to the conventional decorate casket, such as sensitivity, exposure number, CI mark, bar code, instructions, white space for memorandom etc. to the container body by a labeling machine with an automatic label adjusting apparatus. The reverse side of the label is coated with paste (in the case that the label is necessary to be peeled, such as paper label), heat-sensitive adhesive (in the reproducible case by blending with container body, such as polyolefin resin sheet label according to the above a)-b) which may be unfoamed sheet, foamed sheet, nonwoven fabric or synthetic paper), or the label itself, which may be a multilayer structure, is made of a polyolefin resin according to the above a)-b) capable of heat bonding to the container body.
iii) Container body is printed directly or by transfer printing, instead of using a label.
iv) To adhere a label made of paper, plastic, synthetic paper, nonwoven fabric, foamed sheet or the like coated with paste or heat-sensitive adhesive or a label exercising adhesive property by heating to both of the container body and the cap, so that the printed label excercises original seal proof, moistureproofness, water proofness and gas barrier, as well as the above ii).

Various known processings, such as perforation line, notch, tab, etc. for shrinkable films, and no coating of adhesive or tab for label, may be provided to shrinkable film, such as shrinkable single layer film, shrinkable multilayer film, shrinkable laminated film, shrinkable foamed sheet or shrinkable metallized sheet, or label for the purpose to facilitate peeling.

## Claims

1. A resin composition comprising a thermoplastic resin, at least one of a lubricant, an antioxidant and an organic nucleating agent, and a dirpproofing agent which inhibits and equalizes the bleeding out of the lubricant, antioxidant and organic nucleating agent contained therein.

2. The resin composition of claim 1 wherein said thermoplastic resin is an ethylene copolymer resin.

3. The resin composition of claim 2 wherein said dripproofing agent is a member selected from the group consisting of diglycerine monostearate ester, polyglycerine monopalmitate ester, sorbitan monolaurate ester, sorbitan monostearate ester, sorbitan monooleate ester, sorbitan monoerucate, polyoxyethylene sorbitan fatty acid ester, stearic acid monoglyceride, palmitate monoglyceride, oleate monoglyceride, laurate monoglyceride, polyoxyethylene nonylphenyl ether, sorbitan sesquipalmitate, diglycerine sesquioleate, sorbitol fatty acid ester, sorbitol fatty acid·dibasic acid ester, diglycerine fatty acid·dibasic acid ester, glycerine fatty acid·dibasic acid ester, sorbitan fatty acid·dibasic acid ester, sorbitan palmitate, sorbitan stearate, sorbitan palmitate·propylene oxide 3 moles adduct, sorbitan palmitate propylene oxide 2 moles adduct, sorbitol stearate, sorbitol strerate ethylene oxide 3 moles adduct, diglycerine palmitate, glycerine palmitate, glycerine palmitate·ethylene oxide 2 moles adduct.

4. The resin composition of claim 3 wherein the content of the dripproofing agent is 0.03 to 5 wt. %.

5. The resin composition of claim 2 wherein said lubricant is a member selected from the group consisting of fatty amide lubricants, unsaturated fatty amide lubricants, bis fatty amide lubricants, monoalkylol amide lubricants, silicone lubricants, nonionic surfactant lubricants, hydrocarbon lubricants, fatty acid lubricants, ester lubricants, alcohol lubricants, metallic soap lubricants.

6. The resin composition of claim 2 wherein said antioxidant is a member selected from the group consisting of phenol antioxidants, ketone-amine condensate antioxidants, arylamine antioxidants, imidazole antioxidants, phosphite antioxidants, thiourea antioxidants and sulfur-containing antioxidants.

7. The resin composition of claim 2 wherein said organic nucleating agent a dibenzylidene sorbitol compound or aluminum benzoate.

8. The resin composition of claim 2 wherein said organic nucleating agent is a member selected from the group consisting of 1,3,2,4-di(methylbenzylidene)sorbitol, 1,3,2,4-di(ethylbenzylidene)sorbitol, 1,3,2,4 di(propylbenzylidene)sorbitol, 1,3,2,4-di(methoxybenzylidene)sorbitol, 1,3,2,4-di(p-methoxybenzylidene)sorbitol, 1,3,2,4-di(ethoxybenzyliene)sorbitol, 1,3,2,4-di(p-methylbenzylidene)sorbitol, 1,3,2,4-di(p-chlorobenzylidene)sorbitol, 1,3,2,4-di(alkylbenzylidene)sorbitol, 1,3,2,4-bis(methylbenzylidene)sorbitol, 1,3,2,4-di(p-hexylbenzylidene)sorbitol, 1,3,2,4-di(1-naphthalenecarbylidene)sorbitol, 1,3,2,4-di(phenylacetylidene)sorbitol, 1,3-heptanylidenesorbitol, 1,3,2,4-diheptanylidenesorbitol, 1,3,2,4-di(3-nonyl-3-pentenylidene)sorbitol, 1,3-cyclohexanecarbylidenesorbitol, 1,3,2,4-dicyclohexanecarbylidenesorbitol, 1,3,4,2-di(p-methylcyclohexanecarbylidene)sorbitol.

9. The resin composition of claim 2 which further contains on absorbent of the lubricant, the antioxidant and the organic nucleating agent contained therein.

10. The resin composition of claim 9 wherein said absorbent is carbon black, titanium nitride or graphite.

11. A packaging material for photosensitive materials molded of the resin composition of claim 1 or 9 by injection molding.

12. A packaging material for photosensitive materials which is a film molded of the resin composition of claim 1 or 9 by inflation process.

13. A container for a photographic film which is made of a polyolefin resin composition comprising a dripproofing substance having antifog action or dripproof action, a lubricant, an antioxidant, and more than 50 wt. % of a polyolefin resin.

14. The container of claim 13 wherein the polyolefin resin composition comprises 0.01 to wt. % of the dripproofing substance, 0.01 to 3 wt. % of the lubricant, 0.01 to 0.5 wt. % of the antioxidant which is a phenol antioxidant or a phosphorous-containing antioxidant and more than 50 wt. % of the polyolefin resin which is a propylene- -olefin random copolymer resin.

15. The container of claim 13 wherein the polyolefin resin composition comprises 0.01 to 3 wt. % of the dripproofing substance, 0.01 to 3 wt. % of the lubricant, 0.01 to 0.5 wt. % of the antioxidant which is a phenol antioxidant or a phosphorous-containing antioxidant and more than 50 wt. % of the polyolein resin which is a density of more than 0.940 g/cm³ ethylene-α-olefin random copolymer resin.

16. The container of claim 13 or 14 wherein said resin composition has a heat history of higher than 180 C.

17. The container of claim 13 wherein the content of the dripproofing substance is not less than the lubricant.

18. The container of claim 13 wherein the lubricant is a nonionic surfactant lubricant and the content is 0.01 to 2 wt. %.

19. The container of claim 13 which further contains 0.01 to 2 wt. % of a nucleating agent.

20. The container of claim 13 which further contains 0.01 to 30 wt. % of a light-reflective light-shielding substance.
